# EUROPEAN PATENT SPECIFICATION

(11) **EP 0 756 075 B1**
(45) Date of publication and mention of the grant of the patent: **20.09.2000**
(21) Application number: 96305312.9
(22) Date of filing: 19.07.1996
(51) Int. Cl.: F02B 61/04, F02B 3/02, F02B 19/12

(54) **Fuel-injected internal combustion engine with improved combustion**
Brennstoffeinspritzbrennkraftmaschine mit verbesserter Verbrennung
Moteur à combustion interne à injection avec combustion améliorée

(30) Priority: 25.07.1995 US 507660; 21.06.1996 US 20257
(43) Date of publication of application: 29.01.1997
(73) Proprietor: Outboard Marine Corporation, Waukegan, Illinois 60085-2195 (US)
(72) Inventor: Haman, David F., Buffalo Grove, Illinois 60089 (US); Craft, Todd D., Lake Villa, Illinois 60046 (US); Binversie, Gregory J., Grayslake, Illinois 60030 (US)
(74) Representative: Harding, Richard Patrick

(56) References cited:
- EP-A- 0 486 003
- DE-A- 1 576 002
- DE-A- 2 544 762
- US-A- 4 320 727
- PATENT ABSTRACTS OF JAPAN vol. 18, no. 338 (M-1628), 27 June 1994 & JP-A-06 081654 (MORIKAWA KOJI), 22 March 1994,

## Description

### BACKGROUND OF THE INVENTION

### Technical Field

The invention relates to fuel-injected internal combustion engines and, more particularly, to fuel-injected two-stroke engines. Still more particularly, the invention relates to marine propulsion devices including such engines.

### Related Prior Art

Known two-stroke internal combustion engines include a bowl in the upper surface of the piston and a dome or recess in the lower surface of the cylinder head. It is also known to locate a fuel injector at the top of the dome or recess and to have a spark plug extend into the recess (see EP-A-486 003, JP-A-60 816 654).

It is known to lubricate a fuel-injected two-stroke engine by mixing oil with the fuel that is injected into the cylinders. The mixing ratio can vary from 50 to 1 during high-load operation to 200 to 1 during low-load operation.

### SUMMARY OF THE INVENTION

The invention provides a direct fuel-injected engine with an improved combustion arrangement that reduces spark plug fouling, improves running quality (especially at low speeds), reduces harmful emissions, reduces foul exhaust odors, reduces fuel consumption, and provides good stratification in the combustion chamber. These advantages are the result of the following structural features of the invention.

The squish zone and therefore turbulence are maximized for more complete mixing of fuel with air, thereby providing faster and more complete combustion.

The cylinder head includes a dome or recess having a height at least one-third of the cylinder diameter and an area between about one-fourth and about one-fifth of the cylinder head area outside of the recess. The piston preferably has therein a bowl directly below the recess.

The spark plug is located so that the spark is outside the cone of fuel spray but within the volume of fuel vapor surrounding the fuel spray, so that only the fuel vapor is directly ignited.

The distance from the fuel injector nozzle (the point of injection) to the spark plug electrode and the distance the injected fuel travels before contacting a boundary surface (cylinder head wall or piston) are maximized to allow time for the fuel spray cone to disperse into finer droplets and mix with air before ignition, providing faster, more complete ignition.

The fuel is ignited directly (versus after being reflected by the piston) to utilize the turbulence created by the injected fuel spray.

The charge is contained with the combustion chamber and piston bowl arrangement for good stratification.

In the preferred embodiment of the invention, a small amount of oil or lubricant (insufficient for engine lubrication) is injected with the fuel to reduce spark plug fouling. It has been discovered that the detergent additives in two-stroke oil reduce spark plug fouling if the oil is introduced into the cylinder in this manner. Preferably, the oil is pumped to the fuel injectors by a second oil pump separate from the main pump that supplies oil to the crankcases.

More particularly, the invention provides an internal combustion engine comprising the features defined in claim 1.

### BRIEF DESCRIPTION OF THE DRAWINGS

Fig. 1 is a side elevational view of a marine propulsion device embodying the invention.

Fig. 2 is a partial sectional view of the engine of the marine propulsion device.

Fig. 3 is an enlarged portion of Fig. 2.

Fig. 4 is a view taken along line 4-4 in Fig. 3 and with the piston removed.

Fig. 5 is a view similar to Fig. 3 of an alternative embodiment of the invention.

Fig. 6 is a view taken along line 6-6 in Fig. 5 and with the piston removed.

Before one embodiment of the invention is explained in detail, it is to be understood that the invention is not limited in its application to the details of construction and the arrangements of components set forth in the following description or illustrated in the drawings. The invention is capable of other embodiments and of being practiced or being carried out in various ways. Also, it is to be understood that the phraseology and terminology used herein is for the purpose of description and should not be regarded as limiting.

### DETAILED DESCRIPTION OF THE PREFERRED EMBODIMENT

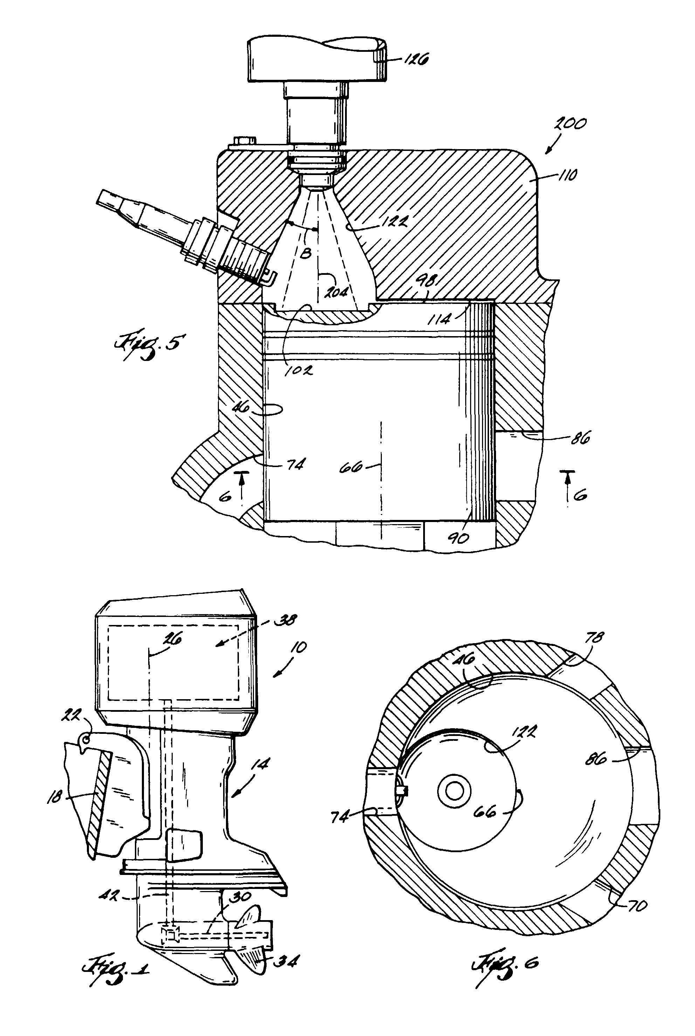

A marine propulsion device 10 embodying the invention is illustrated in Fig. 1. The marine propulsion device 10 includes an outboard drive unit 14 adapted to be mounted the transom 18 of a boat for pivotal tilting movement relative thereto about a generally horizontal tilt axis 22 and for pivotal steering movement relative thereto about a generally vertical steering axis 26. The drive unit 14 includes a propeller shaft 30 having a propeller 34 fixed thereto. The drive unit 14 also includes a fuel-injected, two-stroke internal combustion engine 38 drivingly connected to the propeller shaft 30 by a conventional drive train 42. In the preferred embodiment of the invention, the engine 38 is a six-cylinder V-type engine. It should be understood, however, that the invention is applicable to other types of engines with any number of cylinders.

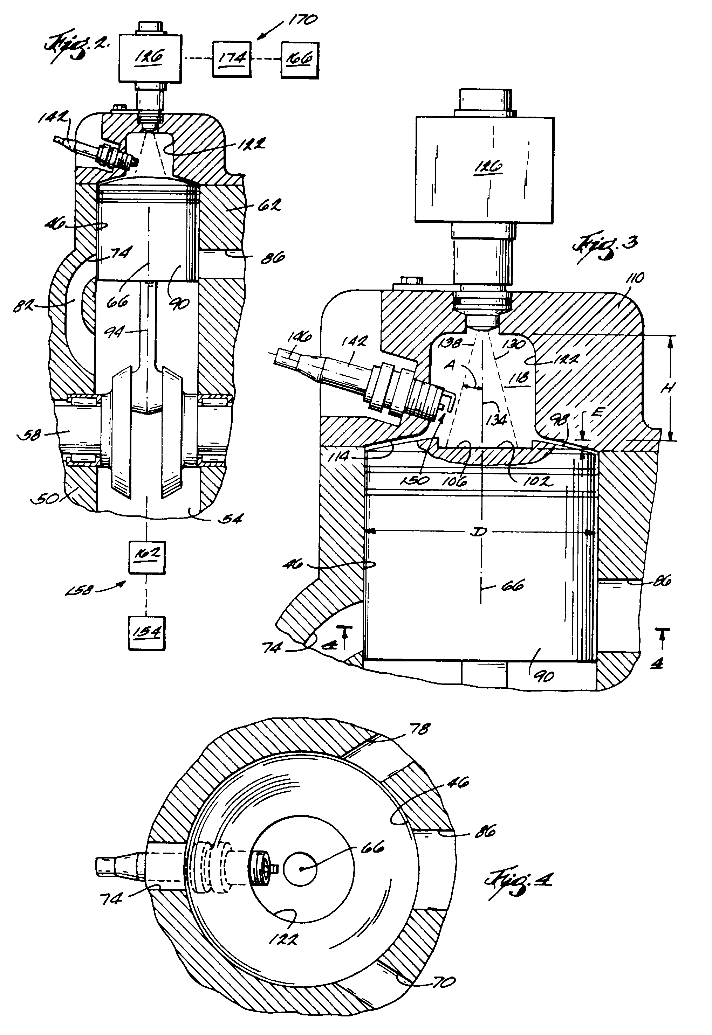

One cylinder 46 of the engine 38 is illustrated in Fig. 2. The engine 38 includes a crankcase 50 defining a crankcase chamber 54 and having a crankshaft 58 rotatable therein. An engine block 62 defines the cylinder 46, which has a longitudinal axis 66 and an upper end (the upper end in Fig. 2). In the illustrated construction, the cylinder 46 has a diameter D of 3.600 inches, so that the cross-sectional area of the cylinder 46 in a plane perpendicular to the axis 66 is approximately 10.18 square inches. The engine block 62 also defines (see Fig. 4) three intake ports 70, 74 and 78 communicating with the cylinder 46. Each of the ports communicates with the crankcase chamber 54 via a respective transfer passage 82 (one shown in Fig. 2). The engine block 62 also defines an exhaust port 86 which communicates with the cylinder 46 and which is located diametrically opposite the intake port 74. This construction is well known in the art and will not described in greater detail.

The engine 38 also includes a piston 90 reciprocally moveable in the cylinder 46 along the axis 66. The piston 90 is drivingly connected to the crankshaft 58 by a connecting rod 94. The piston 90 has (see Fig. 3) an upper surface 98 having therein a circular bowl 102. The bowl 102 has a planar bottom surface 106 perpendicular to the axis 66. In the illustrated construction, the bowl 102 has a diameter of 1.310 inches and a depth E of .100 inch. The upper surface 98 surrounding the bowl 102 is convex, defining a portion of a sphere having a radius of 5.750 inches.

The engine 38 also includes a cylinder head 110 including a lower surface portion 114 closing the upper end of the cylinder 46 so as to define a combustion chamber 118 between the piston upper surface 98 and the cylinder head lower surface portion 114. When the piston 90 is at top dead center, the piston upper surface 98 is spaced .040 inch from the cylinder head lower surface portion 114. The cylinder head lower surface portion 114 extends generally perpendicular to the cylinder axis 66 and has therein an upwardly extending recess or dome 122. The cylinder head lower surface portion 114 surrounding the recess 122 is concave and is complementary with the piston upper surface 98. The recess 122 is located directly above the bowl 102 and is generally cylindrical, being centered on the cylinder axis 66. The recess 122 has an upper end and a lower end (the upper and lower ends in Fig. 3). In the illustrated construction, the recess 122 has a diameter of 1.600 inches and an area in a plane perpendicular to the cylinder axis 66 of approximately 2.011 square inches. Thus, the recess area is equal to approximately one-fifth the cross-sectional area of the cylinder 46, so that the combustion chamber 118 has a squish factor of approximately four to one. (The squish factor is the ratio of the area of the cylinder 46 outside the recess 122 to the area of the recess 122.) Also, in the illustrated construction, the recess 122 has a height H of 1.770 inches, so that the height is approximately one-half the cylinder diameter.

The engine 38 also includes a fuel injector 126 mounted on the cylinder head 110 for injecting fuel into the upper end of the recess 122. The preferred fuel injector 126 is disclosed in U.S. Serial No. , filed and titled "Combined Pressure Surge Fuel Pump and Nozzle Assembly" (Attorney Docket No. 72012/7290). The fuel injector 126 creates a cone 130 of fuel spray surrounded by a volume of fuel vapor, the cone 130 being centered on the cylinder axis 66. Preferably, substantially the entirety of the fuel spray cone 130 strikes the bottom surface 106 of the bowl 102 before striking any other surface. As shown in Fig. 2, the fuel spray cone 130 is centered on a cone axis 134 (also the cylinder axis 66) and has an outside defining a line 138 in a plane including the cone axis 134 (the plane of the paper), the line 138 and the cone axis 134 forming an acute angle A. In the illustrated construction, the angle A is approximately 15°.

The engine 38 also includes a spark plug 142 which is mounted on the cylinder head 110 and which extends into the recess 122. In the illustrated construction, the spark plug 142 extends along a plug axis 146 which is located in the plane of the cone axis 134 and the line 138 and which is perpendicular to the line 138. Also, the spark plug 142 is located directly above the intake port 74. The spark plug 142 includes a spark gap 150 located outside the fuel spray cone 130 and within the fuel vapor volume, so that the spark plug 142 initially ignites fuel vapor rather than directly igniting the fuel spray. The distance from the spark gap 150 to the point of injection is greater than the distance from the spark gap 150 to the piston upper surface 98 when the piston 90 is at top dead center. In the illustrated construction, the spark gap 150 is spaced approximately twice as far from the point of injection as it is from the piston upper surface 98 when the piston 90 is at top dead center. Ignition is timed so that the spark plug 142 ignites the fuel spray before the fuel spray strikes the piston upper surface 98.

The engine 38 also includes a source of primary lubricant, i.e. an oil tank 154 (shown schematically in Fig. 2), and a lubricant supply system 158 for supplying oil from the oil tank 154 to the chamber 54 of the engine 38. The lubricant supply system 158 includes an oil pump 162 communicating between the oil tank 154 and the crankcase chamber 54. The preferred lubricant supply system 158 is disclosed in part in U.S. Serial No. , filed and titled "Oil Lubricating System For A Two-Stroke Internal Combustion Engine" (Attorney Docket No. 72012/3040). The lubricant supply system 158 supplies oil directly to the various crankcase chambers 54 of the engine 38.

The engine 38 also includes a source of fuel, i.e. a fuel tank 166 (shown schematically in Fig. 2), and a fuel supply system 170 for supplying fuel to the various fuel injectors 126 of the engine 38. The fuel supply system 170 includes a fuel pump 174 communicating between the fuel tank 166 and the fuel injectors 126. The preferred fuel supply system 170 and portions of the lubricant supply system 158 are disclosed in U.S. Serial No. , filed and titled "Combined Fuel and Oil Pump For Internal Combustion Engine" (Attorney Docket No. 72012/7360).

The engine 38 preferably also includes a source of secondary lubricant which is mixed with the fuel injected into the cylinders 46. Although a separate lubricant source could be employed, in the illustrated construction, the source of fuel and the source of secondary lubricant are a single tank (the fuel tank 166) of mixed fuel and oil. The ratio of fuel to secondary lubricant by volume is preferably within the range of 50:1 to 300:1 and does not vary with engine speed. In the preferred embodiment, the ratio is approximately 250:1, i.e., substantially greater than 200:1, at all engine speeds. In other words, the amount of secondary lubricant injected into the cylinders 46 by the fuel injectors 126 is substantially less than is necessary to adequately lubricate the engine 38. The purpose of the secondary lubricant is not lubrication of the engine 38, but is reduction of spark plug fouling. It has been found that mixing a relatively small amount of oil with the injected fuel significantly reduces spark plug fouling, because the detergent additives in two-stroke oil reduce spark plug fouling if the oil is introduced into the cylinder in this manner. In an alternative embodiment of the invention, the secondary lubricant is provided by a combined fuel and oil pump drawing fuel and oil from separate tanks. Any suitable fuel and oil pump can be employed. Another alternative would be using a completely separate oil pump drawing from a separate oil tank. Another alternative would be simply adding the detergent directly to the fuel or to the cylinder independently of the fuel.

An engine 200 that is an alternative embodiment of the invention is illustrated in Figs. 5 and 6. Except as described below, the engine 200 is substantially identical to the engine 38 illustrated in Figs. 2-4, and common elements have been given the same reference numerals.

In the engine 200, the recess 122 is generally conical and converges upwardly. The recess 122 is centered on a line 204 parallel to and offset from the cylinder axis 66, and the engine block 62 and cylinder head 110 provide a smooth transition between the cylinder 46 and the recess 122 at a point directly above the intake port 74. In other words, referring to Fig. 6, the wall of the recess 122 is tangential with the wall of the cylinder 46 at a point directly above the intake port 74. The wall of the recess 122 defines an angle B of approximately 24° relative to the center line 204 of the recess 122. Also, as shown in Fig. 5, the wall of the recess 122 extends vertically adjacent the lower end thereof, with a smooth transition between the angled and vertical portions. In the engine 200, the piston bowl 102 is also offset from the cylinder axis 66 and is located directly below the recess 122. The piston upper surface 98 of the engine 200 is planar, rather than convex, and the cylinder head lower surface portion 114 surrounding the recess 122 is also planar.

## Claims

1. An internal combustion engine comprising:
an engine block defining a cylinder having a longitudinal axis, an upper end, and a cross-sectional area in a plane perpendicular to said axis;
a piston reciprocally moveable in said cylinder along said axis, said piston having an upper surface, said piston upper surface having therein a bowl;
a cylinder head including a lower surface portion closing said upper end of said cylinder, said lower surface portion extending generally perpendicular to said axis and having therein an upwardly extending recess, said recess having an upper end, a lower end, and a height, said lower end of said recess having an area in a plane perpendicular to said axis, said area being equal to approximately one-fifth said cross-sectional area of said cylinder, said height being equal to at least one-third of said cylinder diameter, said recess being located directly above said bowl;
a fuel injector supported relative to said cylinder head for injecting fuel into said recess; and
a spark plug which is supported relative to said cylinder head and which extends into said recess for creating a spark.

2. An engine as set forth in claim 1 wherein said bowl has an area in a plane perpendicular to said cylinder axis, said bowl area being less than said recess area.

3. An engine as set forth in claim 2 wherein said bowl has a planar bottom surface perpendicular to said cylinder axis.

4. An engine as set forth in claim 3 wherein said piston upper surface surrounding said bowl is convex, and wherein said cylinder head lower surface portion surrounding said recess is concave and complementary with said piston upper surface.

5. An engine as set forth in claim 1 wherein said recess is generally conical and converges upwardly.

6. An engine as set forth in claim 5 wherein said recess is centered on a line parallel to and offset from said cylinder axis.

7. An engine as set forth in claim 6 wherein said engine block and said cylinder head provide a smooth transition between said cylinder and said recess at a point directly above said intake port.

8. An engine as set forth in claim 1 wherein said recess is generally cylindrical.

9. An engine as set forth in claim 8 wherein said recess is centered on said cylinder axis.

10. An engine as set forth in claim 1 wherein said height of said recess is approximately one-half of said cylinder diameter.

11. An engine as wet forth in claim 1 wherein said piston upper surface is convex, and wherein said cylinder head lower surface portion is concave and complementary with said piston upper surface.

12. An engine as set forth in claim 1 wherein said piston upper surface has therein a generally circular bowl, said bowl having an area in a plane perpendicular to said cylinder axis, said bowl area being less than said recess area, and said bowl having a planar bottom surface perpendicular to said cylinder axis, wherein said piston upper surface surrounding said bowl is convex, wherein said recess is located directly above said bowl, and wherein said cylinder head lower surface portion surrounding said recess is concave and complementary with said piston upper surface.

13. An engine as set forth in claim 1 wherein said fuel injector injects into said upper end of said recess a fuel spray cone centered on a cone axis parallel to said cylinder axis, and wherein substantially the entirety of said fuel spray cone strikes said piston upper surface before striking any other surface.

14. An engine as set forth in claim 1 wherein said fuel injector injects into said upper end of said recess a fuel spray cone centered on a cone axis parallel to said cylinder axis, wherein said spark plug includes a spark gap, and wherein the distance from said spark gap to said upper end of said recess is greater than the distance from said spark gap to said piston upper surface when said piston is at top dead center.

15. An engine as set forth in claim 1 wherein said fuel injector injects a fuel spray into said upper end of said recess, and wherein said spark plug ignites said fuel spray before said fuel spray strikes said piston upper surface.

16. An engine as set forth in claim 1 wherein said engine block also defines intake and exhaust ports communicating with said cylinder, said ports being generally diametrically opposed relative to said cylinder, and wherein said spark plug is located directly above said intake port.

## Patentansprüche

1. Verbrennungsmotor, aufweisend;
einen Motorblock, der einen Zylinder definiert, der eine Längsachse, ein oberes Ende, und in einer zu der Achse senkrechten Ebene eine Querschnittsfläche hat;
einen Kolben, der in dem Zylinder längs der Achse hin- und her bewegbar ist, wobei der Kolben eine obere Oberfläche hat, und die obere Kolbenoberfläche eine Mulde aufweist;
einen Zylinderkopf, der einen unteren Oberflächenbereich umfaßt, der das obere Ende des Zylinders verschließt, wobei sich der untere Oberflächenbereich im allgemeinen senkrecht zu der Achse erstreckt und eine sich nach oben erstreckende Aussparung aufweist, wobei die Aussparung ein oberes Ende, ein unteres Ende und eine Höhe hat, wobei das untere Ende der Aussparung in einer zu der Achse senkrechten Ebene eine Fläche hat, wobei die Fläche ungefähr gleich einem Fünftel der Querschnittsfläche des Zylinders ist, wobei die Höhe mindestens gleich einem Drittel des Zylinderdurchmessers ist, wobei die Aussparung direkt über der Mulde gelegen ist;
einen von dem Zylinderkopf getragenen Kraftstoffinjektor, um Kraftstoff in die Aussparung einzuspritzen; und
eine Zündkerze, die von dem Zylinderkopf getragen wird, und die sich in die Aussparung hinein erstreckt, um einen Funken zu erzeugen.

2. Motor, wie in Anspruch 1 angegeben, wobei die Mulde in einer zu der Zylinderachse senkrechten Ebene eine Fläche hat, wobei die Muldenfläche kleiner als die Aussparungsfläche ist.

3. Motor wie in Anspruch 2 angegeben, wobei die Mulde eine zu der Zylinderachse senkrechte, ebene Bodenoberfläche hat.

4. Motor wie in Anspruch 3 angegeben, wobei die obere Kolbenoberfläche, welche die Mulde umgibt, konvex ist, und wobei der untere Zylinderkopfoberflächenbereich, der die Aussparung umgibt, konkav und komplementär zu der oberen Kolbenoberfläche ist.

5. Motor wie in Anspruch 1 angegeben, wobei die Aussparung im allgemeinen konisch ist und nach oben zusammenläuft.

6. Motor wie in Anspruch 5 angegeben, wobei die Aussparung bezüglich einer zu der Zylinderachse parallelen und gegenüber der Zylinderachse versetzten Linie zentriert ist.

7. Motor wie in Anspruch 6 angegeben, wobei der Motorblock und der Zylinderkopf einen glatten Übergang zwischen dem Zylinder und der Aussparung bei einem direkt über der Einlaßöffnung liegenden Punkt ergeben.

8. Motor wie in Anspruch 1 angegeben, wobei die Aussparung im allgemeinen zylindrisch ist.

9. Motor wie in Anspruch 8 angegeben, wobei die Aussparung bezüglich der Zylinderachse zentriert ist.

10. Motor wie in Anspruch 1 angegeben, wobei die Höhe der Aussparung ungefähr gleich der Hälfte des Zylinderdurchmessers ist.

11. Motor wie in Anspruch 1 angegeben, wobei die obere Kolbenoberfläche konvex ist, und wobei der untere Zylinderkopf-Oberflächenbereich konkav und komplementär zu der oberen Kolbenoberfläche ist.

12. Motor wie in Anspruch 1 angegeben, wobei die obere Kolbenoberfläche eine im allgemeinen kreisförmige Mulde hat, wobei die Mulde in einer zu der Zylinderachse senkrechten Ebene eine Fläche hat, wobei die Muldenfläche kleiner als die Aussparungsfläche ist, und wobei die Mulde eine zu der Zylinderachse senkrechte, ebene Bodenoberfläche hat, wobei, die obere Kolbenoberfläche, welche die Mulde umgibt, konvex ist, wobei die Aussparung direkt über der Mulde gelegen ist, und wobei der untere Zylinderkopf-Oberflächenbereich, der die Aussparung umgibt, konkav und komplementär zu der oberen Kolbenoberfläche ist.

13. Motor wie in Anspruch 1 angegeben, wobei der Kraftstoffinjektor einen Kraftstoff-Sprühkegel, der bezüglich einer zu der Zylinderachse parallelen Kegelachse zentriert ist, in das obere Ende der Aussparung einspritzt, und wobei im wesentlichen der gesamte Kraftstoffsprühkegel auf die obere Kolbenoberfläche auftrifft, bevor er auf irgendeine andere Oberfläche auftrifft.

14. Motor wie in Anspruch 1 angegeben, wobei der Kraftstoffinjektor einen Kraftstoff-Sprühkegel, der bezüglich einer zu der Zylinderachse parallelen Kegelachse zentriert ist, in das obere Ende der Aussparung einspritzt, wobei die Zündkerze eine Funkenstrecke umfaßt, und wobei die Entfernung von der Funkenstrecke bis zu dem oberen Ende der Aussparung größer ist als die Entfernung von der Funkenstrecke bis zu der oberen Kolbenoberfläche, wenn der Kolben in dem oberen Totpunkt ist.

15. Motor wie in Anspruch 1 angegeben, wobei der Kraftstoffinjektor einen Kraftstoffnebel in das obere Ende der Aussparung einspritzt, und wobei die Zündkerze den Kraftstoffnebel zündet, bevor der Kraftstoffnebel auf die obere Kolbenoberfläche auftrifft.

16. Motor wie in Anspruch 1 angegeben, wobei der Motorblock auch Einlaß- und Auslaßöffnungen definiert, die mit dem Zylinder in Verbindung stehen, wobei die Öffnungen relativ zu dem Zylinder im allgemeinen diametral gegenüberliegen, und wobei die Zündkerze direkt über der Einlaßöffnung gelegen ist.

## Revendications

1. Moteur à combustion interne comprenant:
un bloc moteur définissant un cylindre comportant un axe longitudinal, une extrémité supérieure et une surface de section transversale dans un plan perpendiculaire audit axe;
un piston pouvant effectuer un mouvement alternatif dans ledit cylindre le long dudit axe, ledit piston comportant une surface supérieure, ladite surface supérieure du piston contenant une cuve;
une culasse de cylindre englobant une partie de surface inférieure fermant ladite extrémité supérieure dudit cylindre, ladite partie de surface inférieure s'étendant de façon généralement perpendiculaire audit axe et contenant un évidement s'étendant vers le haut, ledit évidement comportant une extrémité supérieure, une extrémité inférieure et une hauteur, ladite extrémité inférieure dudit évidement comportant une surface dans un plan perpendiculaire audit axe, ladite surface correspondant environ à un cinquième de ladite surface de section transversale dudit cylindre, ladite hauteur représentant au moins un tiers du diamètre dudit cylindre, ledit évidement étant agencé directement au-dessus de ladite cuve;
un injecteur de carburant supporté par rapport à ladite culasse de cylindre pour injecter le carburant dans ledit évidement; et
une bougie d'allumage supportée par rapport à ladite culasse de cylindre et s'étendant dans ledit évidement pour produire une étincelle.

2. Moteur selon la revendication 1, dans lequel ladite cuve comporte une surface dans un plan perpendiculaire audit axe du cylindre, ladite surface de la cuve étant inférieure à la surface dudit évidement.

3. Moteur selon la revendication 2, dans lequel ladite cuve comporte une surface inférieure plane perpendiculaire audit axe du cylindre.

4. Moteur selon la revendication 3, dans lequel ladite surface supérieure du piston entourant ladite cuve est convexe, ladite partie de surface inférieure de la culasse du cylindre entourant ledit évidement étant concave et complémentaire de ladite surface supérieure du piston.

5. Moteur selon la revendication 1, dans lequel ledit évidement est généralement conique et converge vers le haut.

6. Moteur selon la revendication 5, dans lequel ledit évidement est centré sur une ligne parallèle audit axe du cylindre et décalé par rapport à celui-ci.

7. Moteur selon la revendication 6, dans lequel ledit bloc moteur et ladite culasse de cylindre assurent une transition lisse entre ledit cylindre et ledit évidement au niveau d'un point situé directement au-dessus dudit orifice d'entrée.

8. Moteur selon la revendication 1, dans lequel ledit évidement est généralement cylindrique.

9. Moteur selon la revendication 8, dans lequel ledit évidement est centré sur ledit axe du cylindre.

10. Moteur selon la revendication 1, dans lequel ladite hauteur dudit évidement représente environ la moitié du diamètre dudit cylindre.

11. Moteur selon la revendication 1, dans lequel ladite surface supérieure du piston est convexe, ladite partie de surface inférieure de la culasse du cylindre étant concave et complémentaire de ladite surface supérieure du piston.

12. Moteur selon la revendication 1, dans lequel ladite surface supérieure du piston comporte une cuve généralement circulaire, ladite cuve ayant une surface dans un plan perpendiculaire audit axe du cylindre, ladite surface de la cuve étant inférieure à la surface dudit évidement, ladite cuve comportant une surface inférieure plane perpendiculaire audit axe du cylindre, ladite surface supérieure du piston entourant ladite cuve étant convexe, ledit évidement étant agencé directement au-dessus de ladite cuve, et ladite partie de surface inférieure de la culasse du cylindre entourant ledit évidement étant concave et complémentaire de ladite surface supérieure du piston.

13. Moteur selon la revendication 1, dans lequel ledit injecteur de carburant injecte dans ladite extrémité supérieure dudit évidement un cône de pulvérisation de carburant centré sur un axe de cône paralléle audit axe du cylindre, pratiquement l'ensemble dudit cône de pulvérisation de carburant heurtant ladite surface supérieure du piston avant de heurter une quelconque autre surface.

14. Moteur selon la revendicaiton 1, dans lequel ledit injecteur de carburant injecte dans ladite extrémité supérieure dudit évidement un cône de pulvérisation de carburant centré sur un axe de cône parallèle audit axe du cylindre, ladite bougie d'allumage englobant un écartement des électrodes, la distance entre ledit écartement des électrodes et ladite extrémité supérieure dudit évidement étant supérieure à la distance entre ledit écartement des électrodes et ladite surface supérieure du piston lorsque ledit piston se situe au niveau du point mort supérieur.

15. Moteur selon la revendication 1, dans lequel ledit injecteur de carburant injecte une pulvérisation de carburant dans ladite extrémité supérieure dudit évidement, ladite bougie d'allumage allumant ladite pulvérisation de carburant avant que ladite pulvérisation de carburant heurte ladite surface supérieure du piston.

16. Moteur selon la revendication 1, dans lequel ledit bloc moteur définit également des orifices d'admission et d'évacuation communiquant avec ledit cylindre, lesdits orifices étant en général opposés diamétralement audit cylindre, ladite bougie d'allumage étant agencée directement au-dessus dudit orifice d'admission.
